Europäisches Patentamt

European Patent Office

Office européen des brevets

(11) Publication number: **0 229 222**
B1

# EUROPEAN PATENT SPECIFICATION

(45) Date of publication of the patent specification:
25.10.89

(51) Int. Cl.⁴: **F16J 15/16**, A23G 9/30

(21) Application number: **86112420.4**

(22) Date of filing: **08.09.86**

(54) Germicidal barrier.

(30) Priority: **11.12.85 SE 8505846**

(43) Date of publication of application:
**22.07.87 Bulletin 87/30**

(45) Publication of the grant of the patent:
**25.10.89 Bulletin 89/43**

(84) Designated Contracting States:
**BE CH DE FR GB IT LI NL**

(56) References cited:
**FR-A- 2 335 599**

(73) Proprietor: **Aktiebolaget SKF, S-415 50 Göteborg(SE)**

(72) Inventor: **Lind, Björn, Billdals Häggväg 8,
S-427 00 Billdal(SE)**

(74) Representative: **Kristiansen, Alf P. et al, Aktiebolaget
SKF Patent Department, S-415 50 Göteborg(SE)**

ACTORUM AG

## Description

The invention relates to a device of the kind stated in the introductory clause of claim 1.

In, for example, the food and drug industry there are processes in which maschines having movable parts are used. As a result sealing problems may occur at connections e.g. between shafts and a housing. The problem is particularly manifest if there is overpressure in the machines, whereby there is a risk for the matter present in the machines leaking into the environment through bearings and seals. This may contaminate the environment with microbes present in the process.

It is, in practice, impossible to obtain perfect sealing between two relatively movable elements. It has been suggested that an inert medium be supplied to a gap between the relatively movable surfaces, the pressure of the medium in the gap being higher than the pressure of the matter which is to be prevented from leaking through the gap. Such a seal gives small frictional losses, but the method is not an absolute guarantee for microbes being prevented from passing through the gap for example when the pressue of said medium ceases. Nor can a chemically germicidal agent be used, since the medium is normally supplied to the space in which the process in question takes place, and the process would be affected by such a medium.

It is also known, e.g. from SE-B 7 609 594 (FR-A 2 335 599), to supply steam to a sealing device for a shaft passing through a housing, wherein the high temperature of the steam is germicidal. This arrangement is comparatively expensive and complicated with steam conduits, condenser, return conduits etc.

The object of the present invention is to provide an arrangement of the kind mentioned above, which is simple and compact as well as inexpensive to install and to operate. This is obtained by means of a device which has the characterizing features stated in claim 1.

Such a device can be used, for example, at shaft openings in a separator or the like.

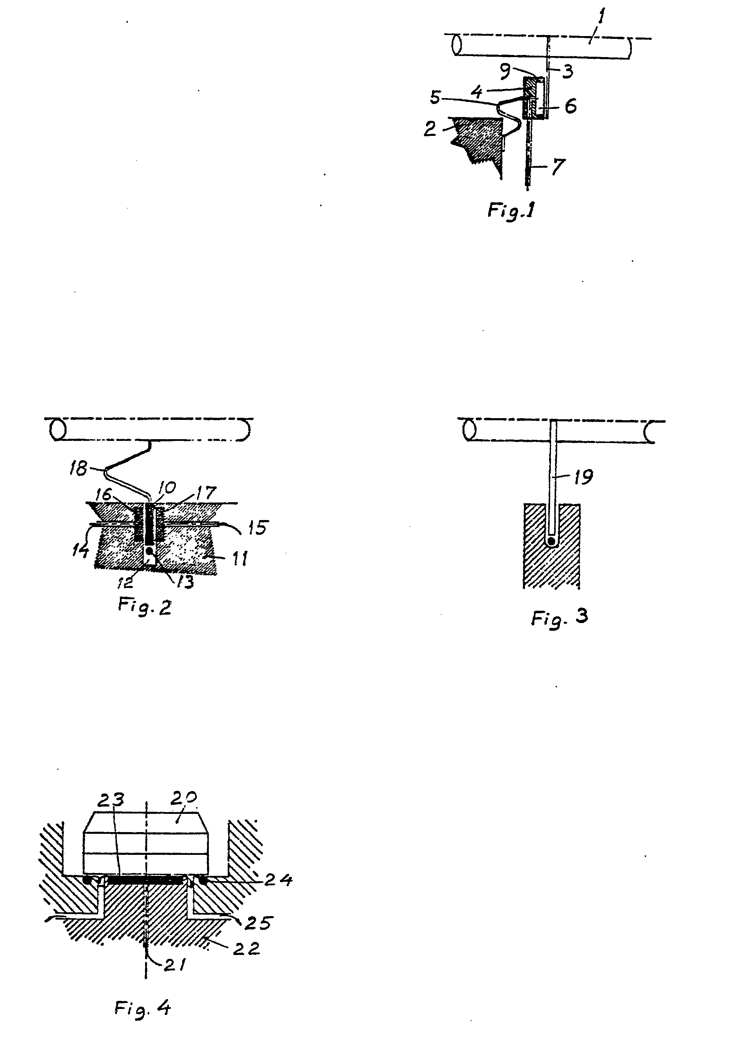

The invention is now described in detail with reference to the accompanying drawing, in which figures 1–4 show longitudinal sections of various embodiments of the invention.

Figure 1 shows a first element 1, e.g. a rotatable shaft, and a second element 2, e.g. a housing. The shaft is arranged through a bore in the housing, and the gap between the two elements is sealed off by the fact that the element 1 is provided with a disk 3 and the element 2 is provided with a ring 4 with a surface facing one surface of the disk. The ring 4 is connected to the element 2 by an annular resilient member 5 which surrounds the element 1. The gab between the elements 1 and 2 is thus limited by the opposing surfaces on the disk 3 and the ring 4. The elements adjacent the gap are made of heat resistant material, and means are provided for heating at least a portion of the gap. The disk 3 may be made of a ceramic material and the surface of the ring 4 facing the disk 3 may be provided with a portion 6 of a gas permeable material, e.g. a sintered compound.

A gas can be brought to the portion 6 via a conduit 7 and be spread in the gap between the disk 3 and the ring 4. The amount of gas flowing out of the gap per unit time unit is comparatively small.

A heatable body is arranged in one of the surfaces defining the gap. The heatable body is formed as a loop 9 which, in the embodiment shown in figure 1, is inserted in the ring 4 at one rim of the gap between the disk 3 and the ring 4. As a result, flow of gas heated to high temperature out past the other rim of the gap is avoided.

As shown in figure 2 the gap cn be situated between a rotatable disk 10 and a member 11 which surrounds the disk and is provided with an annular recess 12 in which the peripheral portion of the disk is inserted. A heatable body 13 of annular shape is provided in the recess 12 between the periphery of the disk 10 and the radially outer limiting surface of the recess. The disk 10 can be supported on one or both sides by a gas layer. The gas can be supplied through conduits 14, 15 to gas permeable bearing layers 16, 17 between which the disk is situated. The disk may be connected to a shaft by a resilient membrane 18, whereby the shaft can be permitted to move axially.

Figure 3 shows an arrangement without external gas supply. If the gaps on either side of the disk 19 are of different size, there will be a certain flow of fluid in a desired direction even when there is no pressure difference between the fluids situated on either side of the disk 19.

Figure 4 shows a rotor 20 supported by a gas bearing with pressurized gas supply through a conduit 21 in an element 22. A gap exists between opposing flat surfaces on the rotor 20 and the element 22, respectively, when the device is in operation. A layer 23 of a gas permeable material is arranged on the element 22 adjacent to the gap. The pressurized gas is fed to the gap through this layer. A heatable body 24 is arranged in the gap on the element 22 and encloses the layer 23. Outlet channels 25 for the gas supplied to the gas bearing may possibly be provided in the element 22. These channels may extend from the flat surface of the element 22 between the layer 23 and the heat emitting loop 24. Consequently, when the device is in operation, cooling of the hat loop by the gas is avoided.

## Claims

1. A device for disinfecting a gap between two elements which are movable in relation to each other, characterized in that a heat emitting heatable body (9, 13, 24) in the shape of a loop is provided adjacent to the gap in heat exchanging contact with a medium which fills the gap.

2. A device according to claim 1, in which said elements consists of a rotatable disk (10) and a member (11) enclosing the disk by means of an annular recess (12) in which the peripheral portion of the disk is inserted, a heatable body (13 being arranged in the recess so that it surrounds the periphery of the disk.

3. A device according to claim 1, in which each element (20, 22) has a flat surface defining the gap, means (21, 23) for supplying a pressurized medium to the gap in order to support one element (20) freely rotatable on the other element (22) being provided in said other element (22), a heatable body (24) being arranged in the gap adjacent the surface of said other element (22) and surrounding said means (21, 23).

**Patentansprüche**

1. Eine Vorrichtung zum Desinfizieren eines Spaltes zwischen zwei Elementen, die relativ zueinander beweglich sind, dadurch gekennzeichnet, daß ein Wärme abgebender, aufheizbarer Körper (9, 13, 24), der eine schleifenförmige Gestalt aufweist, in der Nähe des Spaltes angeordnet ist und in wärmeaustauschendem Kontakt mit einem den Spalt füllenden Medium steht.

2. Eine Vorrichtung nach Anspruch 1, bei der die besagten Elemente durch eine drehend bewegliche Scheibe (10) und ein Element (11), welches die Scheibe mit einer ringförmigen Vertiefung (12) umgibt, in welcher der Umfangsrand der Scheibe eingesetzt ist, gebildet sind, wobei ein aufheizbarer Körper (13) in der Vertiefung angeordnet ist, so daß dieser den Umfang der Scheibe umgibt.

3. Eine Vorrichtung nach Anspruch 1, bei der jedes Element (20, 22) eine den Spalt bildende, ebene Oberfläche aufweist, im besagten anderen Element (22) Mittel (21, 23) vorgesehen sind, welche ein unter Druck stehendes Medium zum Spalt hin leiten, damit das eine Element (20) auf dem anderen Element (22) frei drehbeweglich getragen wird, und ein aufheizbarer Körper (24) im Spalt vorhanden ist, der in der Nähe der Oberfläche des besagten anderen Elementes (22) angeordnet ist und die besagten Mittel (21, 23) umgibt.

**Revendications**

1. Dispositif pour désinfecter un passage entre deux éléments mobiles l'un par rapport à l'autre caractérisé en ce que, un corps en forme de boucle (9, 13, 24) émettant de la chaleur et pouvant être chauffé, est muni au voisinage du passage, au niveau de l'échange thermique, d'un agent qui garnit le passage.

2. Dispositif selon revendication 1, dans lequel lesdits éléments consistent en un disque tournant (10) et un organe (11) enfermant le disque au moyen d'un évidement annulaire (12) dans lequel la partie périphériques du disque est insérée, un corps pouvant être chauffé (13) étant disposé dans l'évidement de façon à entourer la périphérie du disque.

3. Dispositif selon revendication 1, dans lequel chaque éléments (20, 22) présente une surface plane définissant le passage, des moyens (21, 23) pour acheminer un agent de pression dans le passage afin de supporter en rotation libre l'un des éléments (20) sur l'autre élément (22) étant prévus dans ledit autre élément (22), et un corps pouvant être chauffé (24) étant disposé dans le passage au voisinage de la surface du dit autre élément (22) et entourant lesdits moyens (21, 23).

Fig.1

Fig. 2

Fig. 3

Fig. 4